# EUROPÄISCHE PATENTSCHRIFT

(11) **EP 1 457 947 B1**
(45) Veröffentlichungstag und Bekanntmachung des Hinweises auf die Patenterteilung: **02.08.2006**
(21) Anmeldenummer: 03023939.6
(22) Anmeldetag: 22.10.2003
(51) Int. Cl.: G08G 1/16, B60W 30/08, G01C 21/26

(54) **Vorrichtung mit Überholhilfemodul zur Fahrerunterstützung in Kraftfahrzeugen**
Apparatus comprising an overtaking support module for vehicle driver support
Dispositif avec un module d'assistance de doubler pour assister un conducteur de véhicule

(30) Priorität: 11.03.2003 DE 10310501
(43) Veröffentlichungstag der Anmeldung: 15.09.2004
(73) Patentinhaber: ROBERT BOSCH GMBH, 70442 Stuttgart (DE)
(72) Erfinder: Irion, Albrecht, 70563 Stuttgart (DE); Lueder, Jens, 70806 Kornwestheim (DE); Henn, Ruediger-Walter, 70599 Stuttgart (DE)

(56) Entgegenhaltungen:
- EP-A- 0 989 012
- WO-A-99/30919
- WO-A-03/080390
- DE-A- 10 045 944

## Beschreibung

Die Erfindung betrifft eine Vorrichtung mit einem Überholhilfemodul zur Fahrerunterstützung in Kraftfahrzeugen.

Für Kraftfahrzeuge sind Fahrerunterstützungssysteme bekannt, die den Fahrer bei der Führung des Kraftfahrzeugs unterstützen, sei es durch aktiven Eingriff in das Antriebs-, Brems- oder Lenkungssystem des Fahrzeugs oder durch die automatische Erzeugung von Warnhinweisen in kritischen Situationen. Zum Beispiel sind sogenannte Acc-Systeme (Adaptive Cruise Control) bekannt, die eine automatische Regelung des Abstands zu einem vorausfahrenden Fahrzeug ermöglichen. Bei diesen Systemen werden mit Hilfe eines Radarsensors oder eines vergleichbaren Ortungsgerätes die Abstände und Relativgeschwindigkeiten vorausfahrender Fahrzeuge gemessen, und die Geschwindigkeit des eigenen Fahrzeugs wird automatisch so angepaßt, daß das unmittelbar vorausfahrende Fahrzeug in einem geeigneten Sicherheitsabstand verfolgt wird. Wenn kein vorausfahrendes Fahrzeug geortet wird, erfolgt eine Regelung auf eine vom Fahrer gewählte Wunschgeschwindigkeit.

In DE 101 14 187 A wird ein ACC-System dieser Art beschrieben, das zusätzlich ein Überholhilfemodul zur Unterstützung des Fahrers bei Überholvorgängen auf mehrspurigen Straßen aufweist. Wenn ein Überholwunsch des Fahrers erkannt wurde, beispielsweise durch Setzen des Blinkers, bewirkt das Überholhilfemodul automatisch eine vorübergehende Beschleunigung auf eine Überholgeschwindigkeit, die an die auf der Überholspur gefahrene und mit Hilfe des Radarsensors gemessene Geschwindigkeit angepaßt ist, so daß dem Fahrer das Einfädeln in die Überholspur erleichtert wird.

Die DE 101 18 265 A beschreibt ein System, mit dem ein Spurwechselwunsch des Fahrers, u. a. also auch ein Überholwunsch, automatisch anhand der gemessenen Giergeschwindigkeit des eigenen Fahrzeugs und anhand der Relativ-Winkelbewegungen der georteten vorausfahrenden Fahrzeuge erkannt werden kann.

Des weiteren sind Fahrerunterstützungssysteme vorgeschlagen worden, die mit einer beispielsweise durch Kamerasysteme erweiterten Sensorik und durch Eingriff in das Lenksystem des Fahrzeugs in der Lage sind, das Fahrzeug automatisch auf der Spurmitte der derzeit befahrenen Fahrspur zu halten und die bei einem erkannten Spurwechselwunsch automatisch den Spurwechsel auf die Nebenspur steuern.

Aus der DE 100 45 944 A1 ist ein Verfahren zur Regelung des Abstandes und/oder der Geschwindigkeit eines Fahrzeuges in Bezug auf mindestens ein vorausfahrendes Fahrzeug im Zusammenhang mit einem Überholvorgang bekannt, wobei ein an dem Fahrzeug vorgesehenes Erfassungssystem laufend mindestens das direkt vorausfahrende Fahrzeug sowie mindestens die Stellung der Fahrtrichtungsanzeigen und die Lenkstellung oder die Gierrate des Fahrzeuges erfaßt und eine Auswerteeinheit aus den ermittelten Daten laufend Sollwerte zur Regelung der Geschwindigkeit des Fahrzeuges und/oder seines Abstandes mindestens zu dem direkt vorausfahrenden Fahrzeug ermittelt, wobei vorzugsweise nach Betätigen der in Fahrtrichtung überholseitig liegenden Fahrtrichtungsanzeige durch den Fahrer des Fahrzeuges zur Vorbereitung des Überholvorganges der Abstand zu dem direkt vorausfahrenden Fahrzeug verringert wird, der jedoch mindestens so groß wie ein vorgegebener Mindestabstand bleibt, wobei eine weitere an dem Fahrzeug vorgesehene Einrichtung Daten bezüglich länderspezifischer Kenngrößen zur Unterstützung des Überholvorganges bereitstellt.

### Vorteile der Erfindung

Die Erfindung mit den in Anspruch 1 angegebenen Merkmalen ermöglicht es, ein Fahrerunterstützungssystem zu schaffen, bei dem das Überholhilfemodul einen erweiterten Funktionsumfang aufweist. Insbesondere wird das Überholhilfemodul in die Lage versetzt, während eines Überholvorgangs angemessen auf kritische Situationen zu reagieren und/oder riskante Überholmanöver durch geeignete Warnhinweise zu vermeiden, so daß die Verkehrssicherheit erhöht wird.

Zu diesem Zweck ist ergänzend zu dem Überholhilfemodul ein Informationssystem vorgesehen, das dem Überholhilfemodul Ergänzungsinformationen über das Verkehrsumfeld bereitstellt, die für einen Überholvorgang relevant sind. Im Unterschied zu den vom Radarsystem zur Verfügung gestellten Orts- und Geschwindigkeitsdaten anderer Fahrzeuge sollen hier unter Ergänzungsinformationen solche Informationen über das Verkehrsumfeld verstanden werden, die über die reinen Orts- und Geschwindigkeitsdaten anderer Fahrzeuge hinausgehen und die Rahmenbedingungen eines Überholvorganges näher charakterisieren.

In erster Linie kommen als solche Ergänzungsinformationen Verkehrsinfrastrukturinformationen in Betracht, also Informationen über den Fahrbahnverlauf, Kreuzungen, Einmündungen und dergleichen, wie sie z. B. auch von bekannten Navigationssystemen bereitgestellt werden. Anhand dieser Informationen läßt sich z. B. vermeiden, daß ein Überholvorgang unmittelbar vor einer für den Fahrer möglicherweise nicht erkennbaren Kreuzung oder Straßeneinmündung eingeleitet wird. Falls der Überholvorgang bereits eingeleitet ist, kann das Überholhilfemodul durch eine vorübergehende zusätzliche Geschwindigkeitserhöhung dafür sorgen, daß der Überholvorgang rechtzeitig abgeschlossen wird.

Weitere Beispiele für Ergänzungsinformationen, die für Überholvorgänge relevant sein können, sind Infrastrukturinformationen über die Fahrbahnbreite, die Anzahl der Fahrspuren sowie Informationen über Streckenverbote wie Geschwindigkeitsbeschränkungen und Überholverbote sowie Informationen über temporäre Zustände wie Baustellen, Verkehrsstaus, Unfälle, "Geisterfahrer" und dergleichen. Solche Informationen werden zum Beispiel von einem sogenannten intelligenten Navigationssystem bereitgestellt, das eine Kommunikationseinheit für die Kommunikation mit einem Verkehrsleitsystem und/oder mit anderen Verkehrsteilnehmern aufweist. Anhand dieser Informationen ist es möglich, den Fahrer vor Verkehrsverstößen im Zusammenhang mit einem Überholvorgang zu warnen oder zu verhindern, daß ein Überholvorgang kurz vor einer Fahrbahnverengung eingeleitet wird. Andererseits kann die Überholhilfe auch darin bestehen, daß dem Fahrer, der auf einer Straße mit nur einer Richtungsfahrbahn einen Überholvorgang einleiten will, ein Hinweis auf eine kurz bevorstehende Fahrbahnerweiterung auf zwei Spuren gegeben wird, die dann ein sicheres Überholen ermöglicht.

Zu den Verkehrsinfrastrukturdaten können auch Informationen über das Relief, also über Steigungs- und Gefällstrecken gehören. So ist es insbesondere bei Transportfahrzeugen mit hoher.Zuladung zweckmäßig, den Fahrer bei Einleitung eines Überholvorgangs auf eine bevorstehende Steigungstrecke hinzuweisen, die möglicherweise zu einem Abbruch des Überholvorgangs zwingen würde.

Schließlich kann es sich bei den Ergänzungsinformationen auch um Informationen über die Absichten anderer Verkehrsteilnehmer handeln, beispielsweise die Information über die Bereitschaft des Fahrers eines schnelleren nachfolgenden Fahrzeugs, dem eigenen Fahrzeug das Einfädeln auf die Überholspur zu ermöglichen.

Ergänzungsinformationen der oben anhand von Beispielen aufgezeigten Art ermöglichen nicht nur die automatische Erzeugung von Warnhinweisen oder sonstigen Hinweisen an den Fahrer im Zusammenhang mit einem Überholvorgang und eine verbesserte Längs- und gegebenenfalls Querführung des Fahrzeugs während des Überholvorgangs, sondern auch eine einfachere und sicherere Erkennung eines Überholwunsches des Fahrers. So ist es z. B. anhand der bereitgestellten Information über den Fahrbahnverlauf möglich zu entscheiden, ob eine gemessene Änderung der Giergeschwindigkeit des Fahrzeugs oder ein Lenkeingriff des Fahrers durch den gekrümmten Fahrbahnverlauf bedingt ist oder auf eine Spurwechselabsicht des Fahrers hinweist. Ebenso erleichtert es die Kenntnis des Fahrbahnverlaufs aufgrund der Infrastrukturdaten, den Ortungsbereich des Radarsensors so anzupassen, daß während eines Überholvorgangs nicht nur die Fahrzeuge auf der bisherigen Fahrspur, sondern auch auf der Nebenspur, die die künftige Fahrspur sein wird, zuverlässig geortet und angemessen berücksichtigt werden.

Vorteilhafte Ausgestaltungen und Weiterbildungen der Erfindung ergeben sich aus den Unteransprüchen.

Bevorzugt umfaßt das Informationssystem, das die Ergänzungsinformationen bereitstellt, ein herkömmliches Navigationssystem oder ein fortgeschrittenes intelligentes Navigationssystem. Zumindest ein Teil dieser Informationen kann, wie bei Navigationssystemen üblich, auf einem Datenträger (z. B. CD-ROM oder DVD) gespeichert sein. Das beim Navigationssystem üblicherweise vorhandene akustische Sprachausgabesystem kann auch für die Ausgabe der vom Überholhilfemodul erzeugten Fahrerhinweise genutzt werden.

Das intelligente Navigationssystem kann über einen Ländercode auch direkt den Verkehrssinn (Rechts- oder Linksverkehr) feststellen, unabhängig von einer Erkennung des Gegenverkehrs durch den Radarsensor des ACC-Systems. Bei Rechtsverkehr wird dann automatisch das Setzen des linken Blinkers als Überholwunsch gewertet und bei Linksverkehr das Setzen des rechten Blinkers.

Gemäß einer zweckmäßigen Weiterbildung umfaßt das Informationssystem auch ein Kommunikationssystem für den drahtlosen Empfang von Ergänzungsinformationen von einem Verkehrsleitsystem oder von anderen Verkehrsteilnehmern. Die Informationen eines Verkehrsleitsystems können z. B. über Funkbaken mit kurzreichweitigen Radiosendern bereitgestellt werden. Auf diesem Wege lassen sich auch detailliertere Infrastrukturdaten wie Hinweise auf Streckenverbote, besondere Gefahrensstellen und dergleichen übermitteln. Die so empfangenen Daten können entweder direkt ausgewertet oder auch für einen längeren Streckenabschnitt in das Navigationssystem heruntergeladen werden. Auf diese Weise lassen sich insbesondere auch stets aktuelle Informationen über temporäre Zustände wie Baustellen, Verkehrsstaus und dergleichen erhalten. Wahlweise kann das Kommunikationssystem auch auf einem Mobilfunknetz aufbauen. In diesem Fall eröffnet die Kombination mit einem Navigationssystem die vorteilhafte Möglichkeit, anhand der vom Navigationssystem ermittelten aktuellen Position des eigenen Fahrzeugs gezielt diejenigen Daten abzurufen, die für den gerade befahrenen Streckenabschnitt relevant sind.

Die Kommunikation mit anderen Verkehrsteilnehmern eröffnet - bei hinreichendem Durchsetzungsgrad solcher Systeme - vielfältige Möglichkeiten zur Verbesserung von Überholhilfefunktionen. Beispielsweise können Informationen über Behinderungen wie Unfälle, ein Stauende und dergleichen rasch von Fahrzeug zu Fahrzeug an den Nachfolgeverkehr weitergegeben werden, so daß keine Überholmanöver mehr eingeleitet werden, wenn die Überholspur blockiert ist. Denkbar ist auch die gegenseitige Verständigung über die Wunschgeschwindigkeiten oder bisherigen Durchschnittsgeschwindigkeiten der Verkehrsteilnehmer und damit die Vermeidung von unnötigen wechselseitigen Überholmanövern. Ebenso ist es möglich, daß Überholstrategien automatisch zwischen den Überholhilfemodulen der beteiligten Fahrzeuge abgestimmt werden. Beispielsweise kann ein auf der Überholspur fahrendes Fahrzeug seinen Überholwunsch einem vorausfahrenden Fahrzeug signalisieren, das seinerseits ein noch langsameres Fahrzeug auf der rechten Nebenspur vor sich hat. Anhand der gemessenen und gegenseitig ausgetauschten Abstands- und Geschwindigkeitsdaten kann dann automatisch entschieden werden, ob das vorausfahrende Fahrzeug nach rechts einschert, um zunächst das schnellere Fahrzeug überholen zu lassen, oder ob das vorausfahrende Fahrzeug zunächst den eigenen Überholvorgang beendet. Dabei können die Geschwindigkeiten automatisch so angepaßt werden, daß Gefahrensituationen vermieden werden und keiner der Beteiligten übermäßig behindert wird.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm einer erfindungsgemäßen Vorrichtung zur Fahrerunterstützung; und
- Figur 2: eine Skizze zur Erläuterung der Funktionsweise der Vorrichtung anhand einer Beispiel-Verkehrssituation.

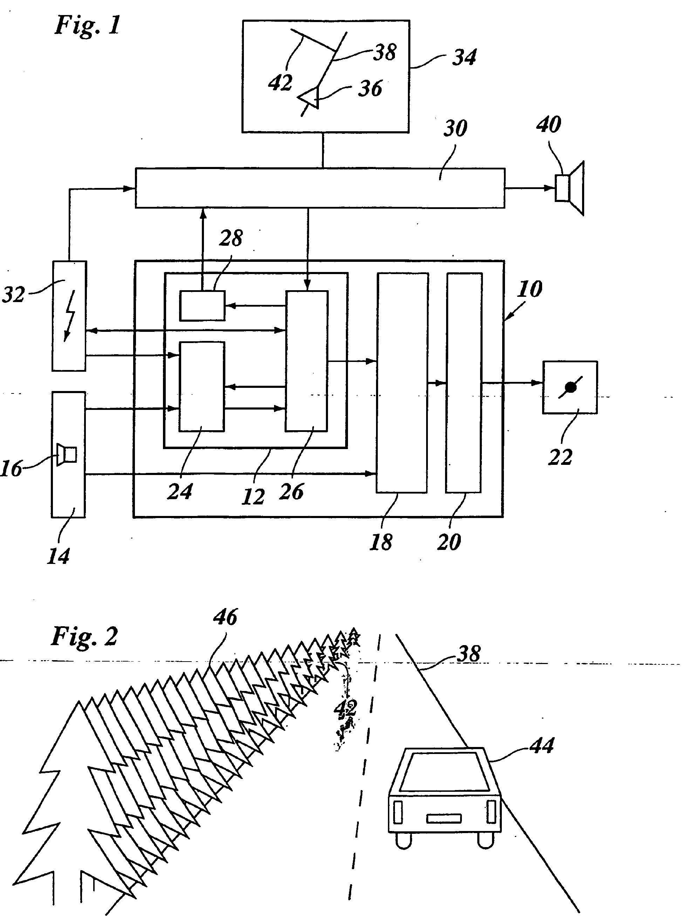

Die in Figur 1 als Blockdiagramm dargestellte Vorrichtung zur Fahrerunterstützung in einem Kraftfahrzeug umfaßt eine ACC-Steuereinrichtung 10 mit einem Überholhilfemodul 12. Die Funktionen der ACC-Steuereinrichtung insgesamt sowie des Überholhilfemoduls 12 werden beispielsweise von einem oder mehreren geeignet programmierten Mikroprozessoren ausgeführt. Der ACC-Steuereinrichtung 10 ist eine Sensoreinrichtung 14 zugeordnet, die mindestens einen Ortungssensor, beispielsweise einen Radarsensor 16, zur Ortung von vorausfahrenden Fahrzeugen sowie weitere nicht näher gezeigte Sensoren zur Erfassung der Längsgeschwindigkeit, der Gierrate sowie anderer relevanter Bewegungsdaten des eigenen Fahrzeugs umfaßt. Die Ortungsdaten der Sensoreinrichtung 14 werden in an sich bekannter Weise in einem ACC-Regler 18 verarbeitet, der über eine Befehlsausgabeeinheit 20 auf das Antriebssystem 22 des Fahrzeugs sowie gegebenenfalls auch auf das Bremssystem einwirkt.

Das Überholhilfemodul 12 enthält eine Erkennungseinheit 24, die anhand der von der Sensoreinrichtung 14 gelieferten Daten, einschließlich des zustands des Fahrtrichtungsanzeigers (Blinkers) des Fahrzeugs, einen Überholwunsch des Fahrers oder einen bereits eingeleiteten Überholvorgang erkennt. Weiterhin enthält das Überholhilfemodul 12 eine Recheneinheit 26, die anhand der Daten der Sensoreinrichtung 14 eine geeignete Überholstrategie berechnet und entsprechende Befehle zum Beschleunigen oder Verzögern des Fahrzeugs an den ACC-Regler 18 ausgibt. Die Recheneinheit 26 aktiviert erforderlichenfalls auch eine Informationsausgabeeinheit 28, über die Hinweise an den Fahrer ausgegeben werden.

Der ACC-Steuereinrichtung 10 ist weiterhin ein Informationssystem zugeordnet, das im gezeigten Beispiel durch ein intelligentes Navigationssystem 30 mit einem Kommunikationssystem 32 gebildet wird.

Das Navigationssystem 30 enthält in bekannter Weise einen nicht näher gezeigten Datenträger, auf dem Landkarteninformation über das Straßennetz gespeichert ist. Ein entsprechender Landkartenausschnitt kann auf einem Bildschirm 34 dargestellt werden. Das Navigationssystem umfaßt außerdem ein Positionssystem, beispielsweise ein satellitengestütztes Positionssystem (GPS; Global Positioning System), mit dem sich die aktuelle Position des eigenen Fahrzeugs ermitteln läßt. Die Fahrzeugposition wird auf dem Bildschirm 34 durch einen Positionszeiger 36 angegeben, der zugleich die aktuelle Fahrtrichtung anzeigt.

Ergänzend zu der Information über das Straßennetz sind auf dem Datenträger des Navigationssystems auch Fahrbahnattribute gespeichert, die die Fahrbahnbreite, die Anzahl der Fahrspuren, Einbahnstraßenregelungen, Geschwindigkeitsbeschränkungen, Überholverbote und dergleichen angeben.

Das Kommunikationssystem 32 gestattet den drahtlosen Empfang von Nachrichten von einem Verkehrsleitsystem sowie wahlweise auch den Austausch von Nachrichten mit anderen Verkehrsteilnehmern, deren Fahrzeuge mit einem vergleichbaren System ausgestattet sind. Das Kommunikationssystem 32 kann auch dazu benutzt werden, die Fahrbahnattribute im Navigationssystem 30 zu aktualisieren und die Positionsdaten von temporären Behinderungsstellen wie Baustellen, Unfällen und dergleichen in die Streckenkarte zu übernehmen.

Alle im Navigationssystem 30 verfügbaren oder über die Kommunikationseinrichtung 32 eintreffenden Informationen, die für eventuelle Überholvorgänge relevant sind, werden an die Recheneinheit 26 des Überholhilfemoduls 12 übermittelt und dort ausgewertet.

Die Funktionsweise der Vorrichtung soll nun anhand einiger Fallbeispiele erläutert werden.

Wenn auf der von dem eigenen Fahrzeug befahrenen Fahrspur ein vorausfahrendes Fahrzeug geortet wird und wenn die Absolutgeschwindigkeit des vorausfahrenden Fahrzeugs kleiner ist als die vom Fahrer des eigenen Fahrzeugs gewählte Wunschgeschwindigkeit, so übermittelt die Erkennungseinheit 24 an die Recheneinheit 26 ein Signal, das einen potentiellen Überholwunsch des Fahrers anzeigt. Vom Navigationssystem 30 erhält die Recheneinheit 26 nun beispielsweise die Information, daß die derzeit vom eigenen Fahrzeug befahrene Straße 38 in der aktuellen Fahrtrichtung nur eine einzige Richtungsfahrbahn hat, daß jedoch nach 300 m eine Fahrbahnverbreiterung auf zwei Fahrspuren erfolgt, so daß dann eine Überholspur für ein gefahrloses Überholen zur Verfügung steht. Die Recheneinheit 26 veranlaßt daraufhin die Informationsausgabeeinheit 28, einen entsprechenden sprachlichen Hinweis an den Fahrer auszugeben. Die Sprachausgabe erfolgt zweckmäßig über ein ohnehin im Navigationssystem 30 vorhandenes Sprachausgabesystem und einen daran angeschlossenen Lautsprecher 40.

Im Navigationssystem 30 ist anhand der Positionsdaten und anhand eines Ländercodes auch Information darüber verfügbar, ob in dem derzeit befahrenen Straßennetz Rechtsverkehr oder Linksverkehr gilt. Wenn nun der Fahrer trotz des vom Überholhilfemodul gegebenen Hinweises unmittelbar einen Überholvorgang einleitet und dazu den linken Blinker setzt, so kann dies unmittelbar als Überholwunsch interpretiert werden, falls nicht eine Abbiegemöglichkeit nach links besteht. Im gezeigten Beispiel besteht jedoch eine solche Abbiegemöglichkeit, da auf die Straße 38 eine weitere Straße 42 von links einmündet. Das Setzen des Blinkers ist deshalb in diesem Fall noch nicht eindeutig als Überholwunsch zu identifizieren. Erst wenn die Erkennungseinheit 24 von der Sensoreinrichtung 14, beispielsweise von einem Giergeschwindigkeitssensor, die Information erhält, daß der Fahrer nach links ausschert, ist die Überholabsicht eindeutig erkennbar, da aufgrund des geraden Verlaufes der Straße 38 kein anderer Grund für eine solche Lenkbewegung ersichtlich ist.

Die Recheneinheit 26 prüft nun, ob der eingeleitete Überholvorgang gefahrlos durchgeführt werden kann.

In Figur 2 ist die geschilderte Verkehrssituation skizziert, wie sie sich für den Fahrer darstellt. Man erkennt den geradlinigen Verlauf der Straße 38 sowie das zu überholende Fahrzeug 44. Die Gegenfahrbahn ist frei, und es hat daher den Anschein, als könne der Überholvorgang gefahrlos durchgeführt werden. Die von links einmündende Straße 42 ist durch eine Baumreihe 46 verdeckt und für den Fahrer kaum zu erkennen. Die Recheneinheit 26 des Überholhilfemoduls 12 hat jedoch vom Navigationssystem 30 die Information über die Einmündung der Straße 42 erhalten und berechnet nun, ob der bereits eingeleitete Überholvorgang noch rechtzeitig vor Erreichen der Einmündung abgeschlossen werden kann. Erforderlichenfalls wird das Programm für die Geschwindigkeitssteuerung während des Überholvorgangs so modifiziert, daß der Überholvorgang schneller abgeschlossen wird. Falls ein sicherer Überholvorgang nicht mehr möglich ist, gibt die Recheneinheit 26 an den Fahrer die sprachliche Aufforderung aus, den Überholvorgang abzubrechen, einschließlich einer Angabe des Grundes.

In entsprechender Weise wird durch das Überholhilfemodul 12 anhand der vom Navigationssystem 30 gelieferten Information ein Warnhinweis an den Fahrer ausgegeben oder das Überholprogramm modifiziert, wenn der Überholvorgang aus anderen Gründen nicht gefahrlos möglich ist, beispielsweise wegen einer bevorstehenden scharfen Kurve, einer Fahrbahnverengung, einer Ampel oder dergleichen.

Sofern das Navigationssystem 30 zur Zieführung auf ein einprogrammiertes Fahrziel benutzt wird, kann selbstverständlich auch die vom Routenplaner berechnete Information über die voraussichtliche Fahrtroute zur Erkennung von Problemsituationen oder zur Erkennung eines Überholwunsches durch Setzen des Blinkers herangezogen werden.

Als weiteres Fallbeispiel soll angenommen werden, daß auf der Straße 38 ein Überholverbot besteht. Diese Information ist entweder im Navigationssystem 30 gespeichert oder wird über das Kommunikationssystem 32 empfangen. Wenn dann der Überholwunsch des Fahrers erkennbar wird, wird ein entsprechender Warnhinweis ausgegeben. Denkbar ist auch die Fallgestaltung, daß das Überholverbot erst in einiger Entfernung beginnt, beispielsweise hinter einer Kurve, so daß das Verbotsschild für den Fahrer noch nicht sichtbar ist. Auch in diesem Fall wird ein Warnhinweis ausgegeben oder der Überholvorgang automatisch so beschleunigt, daß er noch vor dem Überholverbot abgeschlossen werden kann.

Wenn sich auf der Gegenfahrbahn ein Fahrzeug nähert, so kann dieses Fahrzeug vom Radarsensor geortet werden, und anhand des Abstands und der Relativgeschwindigkeit kann die Recheneinheit 26 berechnen, ob der Überholvorgang noch gefahrlos durchgeführt werden kann. Wenn dies nicht der Fall ist, wird wieder ein Warnhinweis ausgegeben. Diese Funktion sollte jedoch nur auf Straßen aktiv sein, auf denen nur eine einzige Richtungsfahrbahn zur Verfügung steht. Bei mehrspurigen Straßen käme es zu Fehlwarnungen, weil der Radarsensor 16 wegen der begrenzten Winkelauflösung nicht sicher zwischen einspurigen und mehrspurigen Straßen unterscheiden kann. Die nötige Information über die Anzahl der Fahrspuren wird hier vom Navigationssystem 30 bereitgestellt.

Wenn das eigene Fahrzeug eine mehrspurige Straße befährt, sollte bei einem zu erwartenden Überholwunsch auch der Verkehr auf der Überholspur vom Radarsystem überwacht werden, damit bei Einleitung des Überholvorgangs eine schnelle Anpassung an die auf der Überholspur gefahrene Geschwindigkeit ermöglicht wird. Wenn das Navigationssystem 30 anzeigt, daß die befahrene Straße mehrspurig ist, und wenn die Erkennungseinheit 24 ein langsameres vorausfahrendes Fahrzeug erkennt, wird deshalb automatisch der Erfassungsbereich des Radarsensors 16 auf die Überholspur erweitert. Falls ein Rückraumradar vorhanden ist, wird in dieser Situation auch die Überwachung des rückwärtigen Verkehrs auf der Nebenspur aktiviert, und es kann automatisch ein Überholvorgang eingeleitet oder der Fahrer auf die Überholmöglichkeit hingewiesen werden.

Durch die vorgeschlagene Kombination eines Überholhilfemoduls 12 mit einem Informationssystem 30, 32 wird somit in einer Vielzahl von Verkehrssituationen eine vorausschauende Anpassung des Fahrverhaltens bei Überholmanövern ermöglicht.

## Patentansprüche

1. Vorrichtung mit einem Überholhilfemodul (12) zur Fahrerunterstützung in Kraflfahrceugen, aufweisend ein Informationssystem (30, 32), das dem Überholhilfemodul (12) Ergänzungsinformationen über das Verkehrsumfeld bereitstellt, die für einen Überholvorgang relevant sind, wobei das Informationssystem ein Navigationssystem (30) enthält, das dem Überholhilfemodul (12) Verkehrsinfrastrukturinformationen über den Fahrbahnverlauf sowie über im Bereich der Überholstrecke liegende Einmündungen oder Kreuzungen bereitstellt
**dadurch gekennzeichnet,**
**daß** das Überholhilfemodul (12) einen Überholwunsch anhand des Zustands des Fahrtrichtungsanzeigers erkennt, wenn sich aufgrund der vom Navigationssystem (30) bereitgestellten Informationen über das Straßennetz und/oder die geplante Fahrtroute ergibt, daß kein Abbiegewunsch in der betreffenden Richtung besteht.

2. Vorrichtung nach Anspruch 1, **dadurch gekennzeichnet,**
**daß** das Navigationssystem (30) eine Kennung bereitstellt, die den Verkehrssinn angibt, und daß das Überholhilfemodul (12) eine Erkennungseinheit (24) aufweist, die anhand des Zustands des Fahrtrichtungsanzeigers des Fahrzeugs einen Überholwunsch erkennt.

3. Vorrichtung nach Anspruch 1 oder 2, **dadurch gekennzeichnet,**
**daß** das Navigationssystem (30) Informationen über Fahrbahnattribute wie Fahrbahnbreite, Anzahl der Fahrspuren oder Streckenverbote bereitstellt.

4. Vorrichtung nach einem der vorstehenden Ansprüche, **dadurch gekennzeichnet,**
**daß** das Informationssystem ein Kommunikationssystem (32) für den Empfang von Nachrichten von einem Verkehrsleitsystem und/oder von anderen Verkehrsteilnehmern enthält.

5. Vorrichtung nach Anspruch 4, **dadurch gekennzeichnet,**
**daß** das Kommunikationssystem (32) Ergänzungsinformationen über temporäre Verkehrsstörungen wie Verkehrsstaus, Baustellen oder Unfallstellen bereitstellt.

6. Vorrichtung nach einem der vorstehenden Ansprüche, **dadurch gekennzeichnet,**
**daß** das Überholhilfemodul (12) dazu ausgebildet ist, durch Abgleichen der gemessenen Querbewegung des Fahrzeugs mit der Information über den Fahrbahnverlauf die Einleitung eines Überholvorgangs durch den Fahrer zu erkennen.

## Claims

1. Device having an overtaking support module (12) for supporting drivers in motor vehicles, having an information system (30, 32) which provides the overtaking support module (12) with supplementary information which relates to the traffic situation and is relevant for an overtaking process, the information system containing a navigation system (30) which provides the overtaking support module (12) with traffic infrastructure information about the course of the carriageway and about junctions or crossroads located in the vicinity of the overtaking distance, **characterized in that** the overtaking support module (12) detects an overtaking request by reference to the state of the travel direction indicator if it becomes apparent on the basis of the information made available by the navigation system (30) about the road network and/or the planned route that there is no desire to turn off the road in the relevant direction.

2. Device according to Claim 1, **characterized in that** the navigation system (30) makes available an identifier which indicates the direction of the traffic, and **in that** the overtaking support module (12) has a detection unit (24) which detects an overtaking request by reference to the state of the travel direction indicator of the vehicle.

3. Device according to Claim 1 or 2, **characterized in that** the navigation system (30) makes available information about carriageway attributes such as width of the carriageway, number of lanes or prohibitions on sections of the carriageway.

4. Device according to one of the preceding claims, **characterized in that** the information system contains a communications system (32) for receiving messages from a traffic control system and/or from other road users.

5. Device according to Claim 4, **characterized in that** the communications system (32) makes available supplementary information about temporary traffic disruption such as traffic jams, roadworks or accident locations.

6. Device according to one of the preceding claims, **characterized in that** the overtaking support module (12) is designed to detect the initiation of an overtaking manoeuvre by the driver by reconciling the measured transverse movement of the vehicle with the information about the course of the carriageway.

## Revendications

1. Dispositif comprenant un module d'assistance au dépassement (12) permettant d'assister un conducteur dans des véhicules automobiles, présentant un système d'information (30, 32) qui met à disposition du module d'assistance au dépassement (12) des informations de complément relatives à l'environnement de trafic intéressantes pour un processus de dépassement, le système d'information contenant un système de navigation (30) qui met à disposition du module d'assistance au dépassement (12) des informations d'infrastructure de trafic relatives au tracé de la chaussée ainsi que relatives aux sorties ou croisements présents dans la zone de la voie de dépassement,
**caractérisé en ce que**
le module d'assistance au dépassement (12) détecte un souhait de dépassement à l'aide de l'état du clignotant lorsque, sur la base des informations relatives au réseau routier et/ou à l'itinéraire prévu, mises à disposition par le système de navigation, il s'avère que le conducteur ne souhaite pas bifurquer dans la direction concernée.

2. Dispositif selon la revendication 1,
**caractérisé en ce que**
le système de navigation (30) met à disposition une caractéristique qui indique le sens du trafic et le module d'assistance au dépassement (12) présente une unité de détection (24) qui détecte, à l'aide de l'état du clignotant du véhicule, un souhait de dépassement.

3. Dispositif selon la revendication 1 ou 2,
**caractérisé en ce que**
le système de navigation (30) met à disposition des informations relatives aux attributs de la chaussée, telles que la largeur de la chaussée, le nombre de voies de circulation ou les sens interdits.

4. Dispositif selon l'une des revendications précédentes,
**caractérisé en ce que**
le système d'information contient un système de communication (32) pour la réception d'informations provenant d'un système de gestion du trafic et/ ou d'autres participants au trafic.

5. Dispositif selon la revendication 4,
**caractérisé en ce que**
le système de communication (32) met à disposition des informations de complément relatives aux perturbations du trafic, telles que les embouteillages, les travaux ou les accidents.

6. Dispositif selon l'une des revendications précédentes,
**caractérisé en ce que**
le module d'assistance au dépassement (12) est configuré pour détecter, par une comparaison entre le mouvement transversal mesuré du véhicule et les informations relatives au tracé de la chaussée, le commencement d'un processus de dépassement par le conducteur.
